Europäisches Patentamt

European Patent Office

Office européen des brevets

(11) Publication number: **0 062 635**
**B1**

(12) **EUROPEAN PATENT SPECIFICATION**

(45) Date of publication of patent specification: **01.03.89**

(51) Int. Cl.⁴: **H 05 H 1/10**

(21) Application number: **81900832.7**

(22) Date of filing: **20.10.80**

(86) International application number:
**PCT/US80/01386**

(87) International publication number:
**WO 82/01457 29.04.82 Gazette 82/11**

(54) CONFINEMENT SYSTEM.

(43) Date of publication of application:
**20.10.82 Bulletin 82/42**

(45) Publication of the grant of the patent:
**01.03.89 Bulletin 89/09**

(84) Designated Contracting States:
**DE FR GB**

(56) References cited:
**US-A-3 015 748**
**US-A-3 085 173**
**US-A-3 093 569**
**US-A-3 101 310**
**US-A-3 143 477**
**US-A-3 166 477**
**US-A-3 170 841**

(73) Proprietor: **LODE, Tenny D.**
**6485 South Dayton Street**
**Englewood, CO 80111 (US)**

(72) Inventor: **LODE, Tenny D.**
**6485 South Dayton Street**
**Englewood, CO 80111 (US)**

(74) Representative: **Cross, Rupert Edward Blount
et al**
**BOULT, WADE & TENNANT 27 Furnival Street
London EC4A 1PQ (GB)**

Courier Press, Leamington Spa, England.

**Description**

This invention relates to a confinement system for diamagnetic fluids such as plasmas and ionized gases.

One of the problems in the study and application of plasmas is the confinement and control of the plasma within a space. The plasmas of interest for thermonuclear reactions are typically of low density and high temperature. For example, the density may be of the order of $10^{15}$ particles per cubic centimeter, or about 1/25,000 of normal atmospheric density, and the temperature may be of the order of $10^6$ to $10^9$ degrees Kelvin. It is generally necessary to confine a plasma within a gas tight chamber because of the desired low density and to prevent contamination of the plasma. The high temperatures and generally high thermal conductivity of a plasma make it necessary to substantially eliminate contact between the plasma and the walls of the chamber and/or other solid structures.

Since plasmas are in general diamagnetic, one of the major techniques for plasma confinement has been the enclosure of the plasma within a magnetic field. However, conventional magnetic field confinement systems suffer from various forms of instabilities and/or may give a leaky or imperfect confinement.

Two of the major conventional types of plasma confinement systems are the magnetic mirror or pyrotron type system and the ring type system. In a typical magnetic mirror type system as described in US—A—3093569, the confinement space is generally in the shape of a right circular cylinder whose length is substantially longer than its diameter. The major confining magnetic field is generally parallel to the axis of the cylinder, and its intensity is greater at the ends of the cylinder than at the middle. The magnetic field generally retards motions of the plasma particles in directions transverse to the field. The stronger magnetic fields at the ends of the confinement region tend to reflect plasma particles back to the central portion of the cylinder. Hence, the name magnetic mirror type system. Two of the major types of plasma leakage of a magnetic mirror type system are leakage out through the ends because or imperfect mirroring, and general diffusion across the magnetic field throughout the confinement region. Other means such as radio frequency fields are sometimes used to further reduce the leakage from the ends.

In a typical ring type system as described in US—A—3143477, the confinement space is generally in the shape of torus. An object is to eliminate the end leakage, such as in magnetic mirror type systems, by closing the confinement space and the major confining magnetic field upon itself so that there are no open ends. A difficulty with ring type sytems is that the confining space and confining fields are curved, and the variation of the magnetic field intensity with position is more complex. This can cause additional forms of instability and leakage.

Since a plasma is a diamagnetic fluid, it will tend to diffuse or move away from a region of higher magnetic field intensity towards a region of lower magnetic field intensity. In either a magnetic mirror or ring type system, it would be desirable it it were possible to arrange the confining magnetic field so that its intensity always increased with distance away from the central part of the confinement region. Such a field configuration does not appear to be physically possible, at least not for fields which are generally parallel to the central part of an extended confinement region.

It is known that the confining field configuration of a ring type system may be arranged so that there are local strong confinement regions in which the magnetic field intensity increases with distance away from the central part of the confinement region. Such systems are sometimes referred to as "bumpy torus" systems, and generally provide a more effective confinement of the plasma in the local strong confinement regions, but do not provide effective plasma confinement in the regions between the local strong confinement regions.

In the system disclosed in the above noted US—A—3093569 a travelling wave magnetic field is produced in the confinement space, the field comprising alternate local strong and weak confinement regions defining a continuous series of regions moving through the space. The wavelength of the travelling wave varies along the axis of the confinement space, and thus substantially all of the confinement space is subjected to the effects of the strong confinement regions which move relative to each other because of the wavelength variation.

The system disclosed in the above noted US—A—3143477 is an example of the above discussed "bumpy torus" type of system wherein weak confinement regions remain stationary, with no relative movement between strong confinement regions.

According to this invention there is provided a diamagnetic fluid confinement system, comprising means defining a confinement space; means for generating a magnetic field within said space, said field having a plurality of local strong confinement regions separated by weak confinement regions; and means for causing said strong confinement regions to move within said space so that substantially all of said space is periodically subjected to the effects of strong confinement regions, characterised in that at least two strong confinement regions are caused to move towards each other and merge thereby eliminating weak confinement regions between them.

This invention will now be described by way of example with reference to the drawings, in which:—

Figure 1 is a cross-sectional view of a magnetic mirror type confinement system according to the invention;

Figures 2A through 2D are diagrammatic illustrations of magnetic field configurations in the system of Figure 1, showing the time variation thereof;

Figure 3 is a cross-sectional view of a ring type confinement system according to the invention;

Figures 4A through 4D are diagrammatic illustrations of magnetic field configurations within the system of Figure 3, showing the time variation thereof; and

Figure 5 is a diagrammatic illustration of a third embodiment of the invention illustrating the general use of fluid pumping means therein.

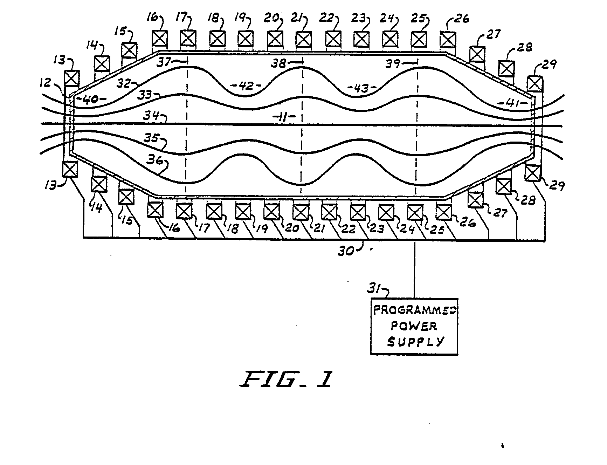

In Figure 1, plasma space 11 is contained within chamber 12. The chamber is formed with suitable walls and is shown only schematically. Electromagnet coils 13 through 29 are arranged along the outside of chamber 12 and, when energized, generate a magnetic field within chamber 12. The coils 13 through 29 surround the chamber 12 and are on the outside of the walls forming chamber 12. Coils 13 through 29 are each connected to line 30 which is connected to a programmed power supply 31. Line 30 is a multiple conductor cable and is intended to generally indicate the individual connections of coils 13 through 29 to separate portions of programmed power supply 31. Magnetic field lines 32 through 36, representing the magnetic field within chamber 12, are shown to facilitate the subsequent description. Dotted lines 37, 38 and 39 are parallel to the planes of coils 17, 21 and 25, respectively, and will be referenced in the subsequent description. End regions 40 and 41, and strong confinement regions 42 and 43 are identified so that they may be subsequently referenced.

The current to each of the coils is individually controlled by the programmed power supply 31. Programmed power supplies which vary power to a load on a time basis are known, and are described, for example, in US—A—3170841, US—A—3015748, and US—A—3166477.

In the present construction the programmed power supply 31 would include known components for sequentially and cyclically varying the current (or, if desired, voltage) to the coils and also include means in the programmer portion to synchronize the cycling of the current (or voltage) between adjacent coils to obtain the desired movement of the local strong magnetic field confinement regions, as will be explained. At the same time, the current to the end coils will remain high to provide strong confinement regions at the ends of chamber 12.

In a simple form, mechanical programmers which operate varying resistances that are operationally ganged together in a desired relationship may be used to vary the current to each coil used in a cycle of operation. The current level of each coil in relation to adjacent coils could also be controlled. Solid state controls providing a varying current to each coil in a time cycle and which synchronize the current provided to each coil with the current to other coils are known in the art.

The system of Figure 1 is generally a magnetic mirror or pyrotron type device, such as is shown an described in the previously mentioned US—A—3093569. Various features of an operating plasma device which are not specifically shown in Figure 1, such as means for plasma injection, means for plasma heating, additional means for confinement of the plasma at the end regions, means for vacuum pumping, means for contaminant removal, etc. are not shown as they may be, for example, of known forms.

In typical operation, coils 13 through 29 are energized so as to generate a magnetic field which extends generally between end regions 40 and 41 as indicated by magnetic field lines 32 through 36. As is typical in pyrotron type machines, coils 13, 14, 15 and 27, 28 and 29 are arranged and energized such that the magnetic field in end regions 40 and 41 is particularly intense so as to aid in generally confining the plasma away from end regions 40 and 41. At a particular instant, as shown in Figure 1, coils 19 and 23 will be more strongly energized, coils 17, 21 and 25 will be less strongly energized and coils 18, 20, 22 and 24 will be energized at an immediate level so that the magnetic field configuration is as shown in Figure 1. The programmed power supply is used to provide the individual energization levels of the coils as described. The magnetic field intensity in strong confinement regions 42 and 43 will be more intense and the curvature of the magnetic field will be generally away from the central axis as indicated by magnetic field lines 32 through 36. The magnetic field intensity at the regions indicated by lines 37, 38 and 39 will be less intense, and the curvature will be generally towards the central axis as indicated by magnetic field lines 32 through 36.

It is known that in a curved magnetic field, the intensity of the magnetic field generally increases in the direction of curvature. Since a plasma is a diamagnetic fluid, it will tend to drift from a region of greater magnetic field intensity towards a region of lower magnetic field intensity. In a curved magnetic field, a plasma will tend to drift in a direction opposite the curvature of the magnetic field. In strong confinement regions 42 and 43, the curvature is away from the central axis and field line 34. Hence, the confined plasma will tend to drift towards the central axis. However, in the regions at lines 37, 38 and 39, the magnetic field curvature is towards the central axis and the plasma will tend to drift away from the central axis. Hence, the confinement in regions 42 and 43 is a strong confinement in which the plasma will tend to be confined near the central axis of chamber 12. The confinement at lines 37, 38 and 39 is a weak confinement in which the plasma will tend to drift away from the central axis.

If it were possible to construct a simple machine in which a leak free, strong confinement field could be generated everywhere within a desired plasma confinement region, the plasma confinement problem would be a relatively simple one. However, as far as is known, there are no practical configurations which have this property. In the system of Figure 1, at any particular instant, a strong confinement is provided in certain regions within chamber 12. An overall general confinement is provided by having the currents through coils 13 through 29 be time varying and different in adjacent coils or sets of coils, such that the individual strong confinement regions move on a time basis relative to chamber 12 and to each other.

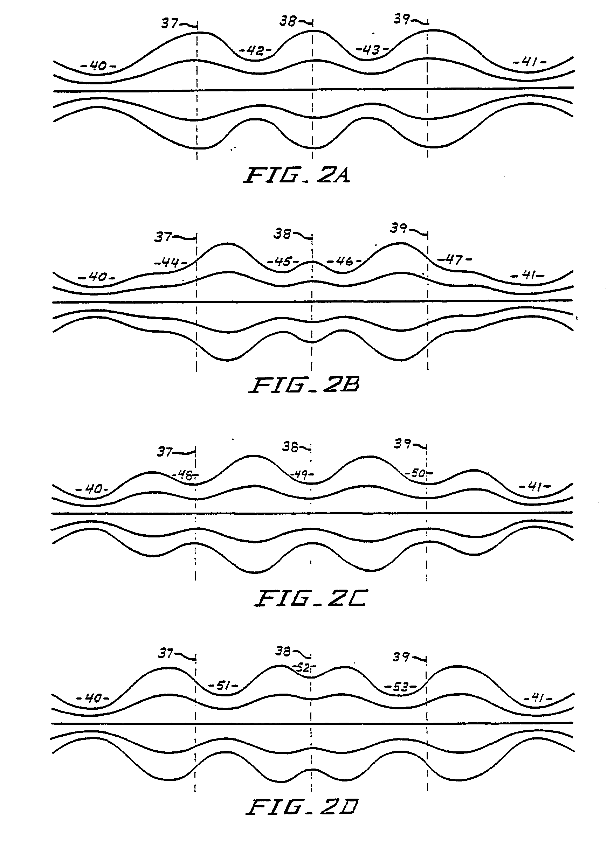

The operation of the system of Figure 1 is illustrated in greater detail in Figures 2A through 2D, which are diagrammatic illustrations of magnetic field configurations in the system of Figure 1 showing the time variations thereof. In Figures 2A through 2D, lines 37, 38 and 39 correspond to lines 37, 38 and 39 of Figure 1, and are used as space reference lines to show more clearly the movement of the magnetic field lines shown in Figures 2A through 2D. End regions 40 and 41 of Figures 2A through 2D correspond to end regions 40 and 41 of Figure 1.

Figure 2A corresponds to the magnetic field configuration illustrated in Figure 1. End regions 41 and 41 are regions of maximum magnetic field intensity and also strong confinement regions. Because of the manner in which coils 13 through 29 are energized, two additional strong confinement regions, 42 and 43, are also generated midway between lines 37 and 38 and midway between lines 38 and 39 due to the strong energization of coils 19 and 23, as previously explained.

One quarter of a cycle later, the programmed power supply will be providing power to the coils so that the magnetic field configuration within chamber 12 will be as shown in Figure 2B. Coils 16, 20, 22 and 26 are now strongly energized by the programmed power supply, thereby generating strong confinement regions 44, 45, 46 and 47. Strong confinement regions 45 and 36 correspond to strong confinement regions 42 and 43 and show that these strong confinement regions have now moved closer to line 38. Strong confinement regions 44 and 47 are beginning to form in the vicinity of end regions 40 and 41, just outside of line 37 and 39. Coils 17, 19, 21, 23 and 25 are at an intermediate energization level, and coils 18 and 24 would be less strongly energized.

One half cycle after the Figure 2A field configuration, coils 17, 21 and 25 will be strongly energized, and coils 19 and 23 would be less strongly energized, causing the generation of a magnetic field pattern as shown in Figure 2C. Strong confinement regions 48, 49 and 50 are now present in the vicinities of lines 37, 38 and 39. Strong confinement region 49 represents a merger of strong confinement regions 42 and 43 which have both moved to line 38. Confinement regions 48 and 50 are the result of the growth and motion of strong confinement regions 44 and 47.

Three quarters of a cycle after the Figure 2A field configuration, coils 18 and 24 will be strongly energized causing the generation of the magnetic field pattern shown in Figure 2D. Strong confinement regions 51 and 53 correspond to strong confinement regions 48 and 50, and show that they are continuing to move towards line 38. Strong confinement region 52 correspponds to strong confinement region 49 but is generally weaker. The cycle then repeats, with the magnetic field configuration going back to that shown in Figure 2A.

Thus, in the operation of the system of Figure 1, a series of strong confinement regions are generated in end regions 40 and 41 by the programmed power supply and the electromagnet coils, and are swept in towards line 38 by sequentially varying the current to the appropriate coils. This has the effect of pumping the outer portions of a confined plasma towards line 38, where it will eventually by subjected to a strong confinement field such as in region 49 of Figure 2C. At any particular time, the individual strong confinement regions extend over only a portion of the plasma region within chamber 12. However, the motion of the individual strong confinement regions relative to chamber 12 and towards each other is such that any given region within chamber 12 will be periodically subjected to a strong confinement field, and such that the outer portions of the confined plasma are pumped through strong confinement regions. This provides an average or general strong confinement.

The coils and the programmed power supply are thus used as means to cause the strong confinement regions to move.

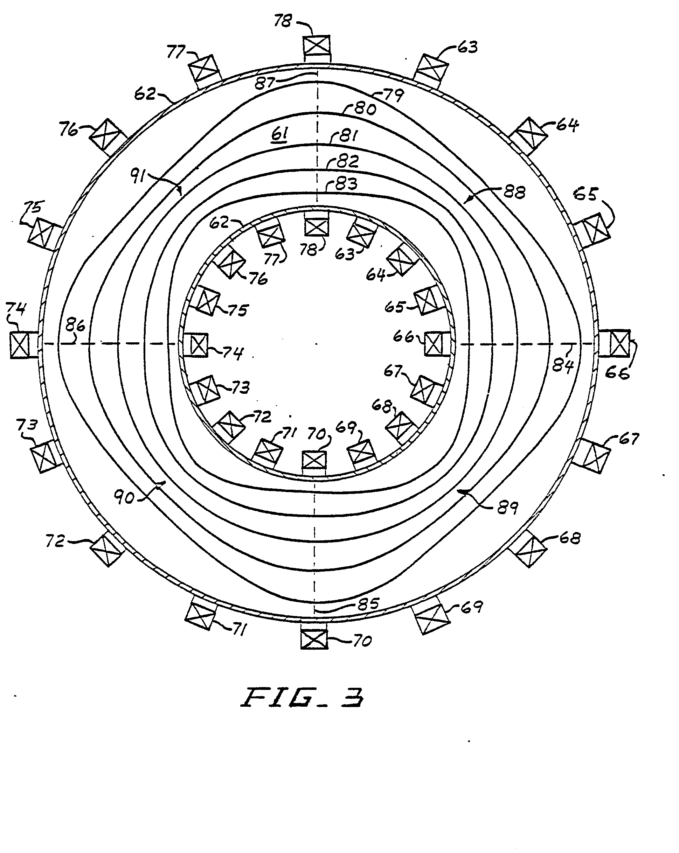

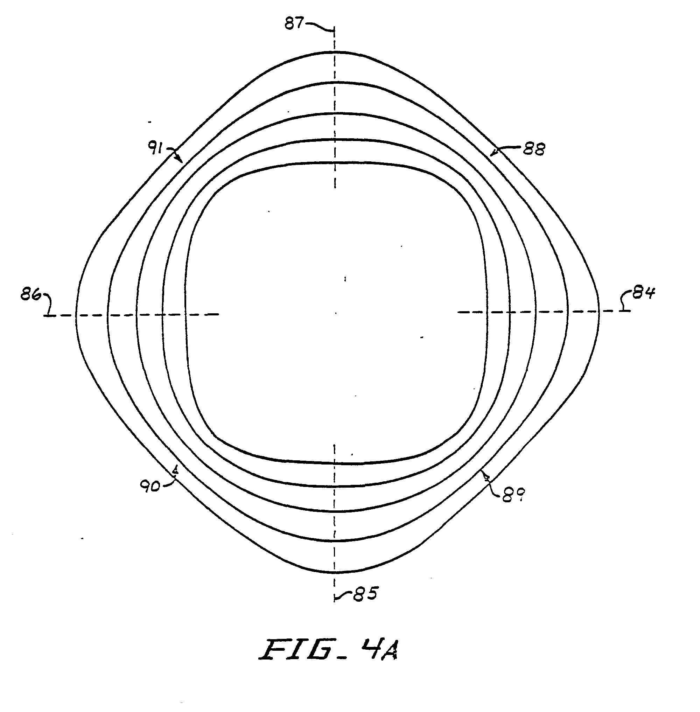

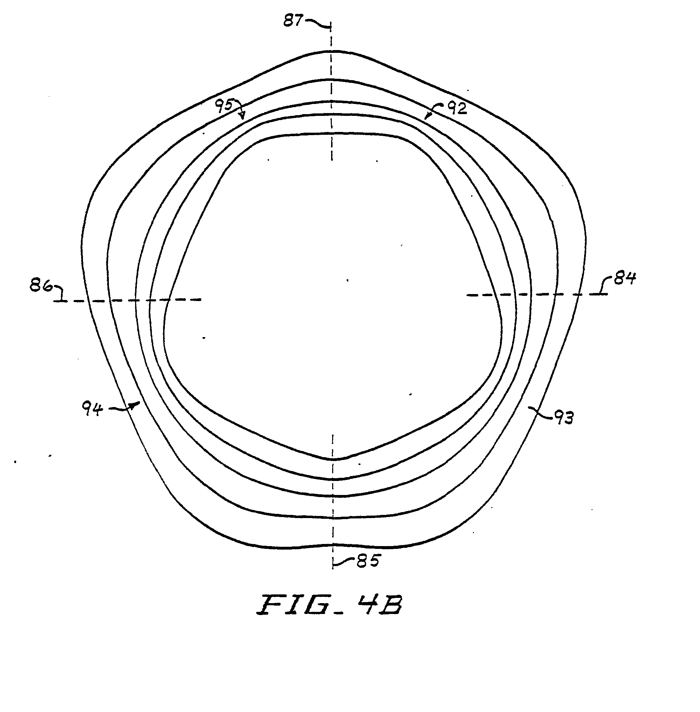

Figure 3 is a cross section illustration of a second form of the invention generally arranged as a ring type confinement system. In Figure 3, plasma confinement region 61 is within an annular chamber 62, which is generally of a ring or toroidal shape. Electromagnet coils 63 through 78 encircle chamber 62 and, when energized, generate a magnetic field within chamber 62. Magnetic field lines 79 through 83 are shown and will be referenced subsequently. Dotted lines 84 through 87 identify certain positions within chamber 62 and will be referenced subsequently. Strong confinement regions 88 through 91 are identified so that they may be referenced subsequently. Coils 63 through 78 are individually connected to a suitable programmed power supply in the general manner shown for the connection of coils 13 through 29 of Figure 1 and the connections are omitted in Figure 3. The power supply used with the system of Figure 3 also individually controls the current to each coil and may vary the current on a time basis.

One of the obvious causes of leakage or imperfect plasma confinement in a magnetic mirror or pyrotron type device, such as in Figure 1, is the leakage due to plasma particles travelling along the magnetic field lines through the end regions and impacting the walls of the confinement chamber. In a ring type device such as shown in Figure 3, the confining magnetic field is generated in a form which is topologically equivalent to a toroid so that is no end leakage. The necessary bending of the magnetic field does introduce other problems, however, which are well known in the field of ring type plasma confinement systems.

In the system of Figure 3, coils 64, 68, 72 and 76 are strongly energized so that the magnetic field is most intense near these coils. This causes the generation of strong confinement regions 88 through 91, in which the magnetic fields lines curve generally away from the center of the confinement region.

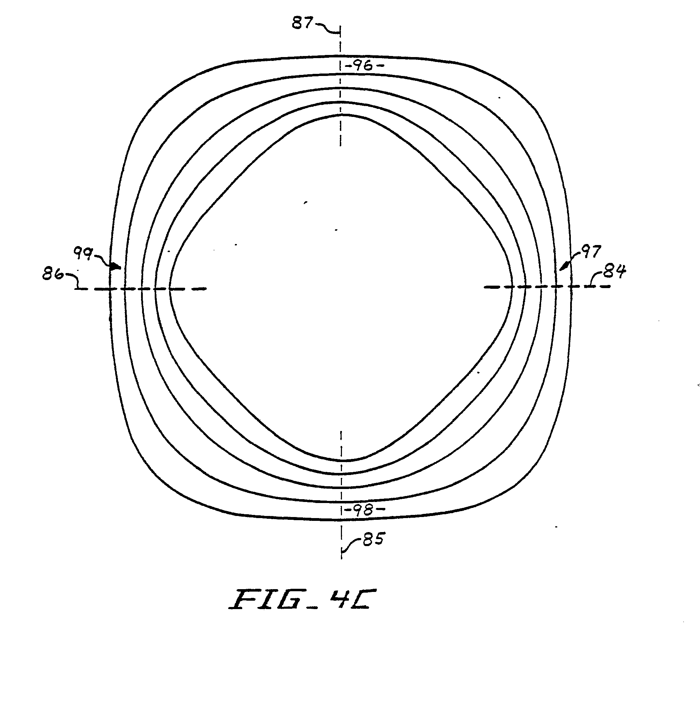

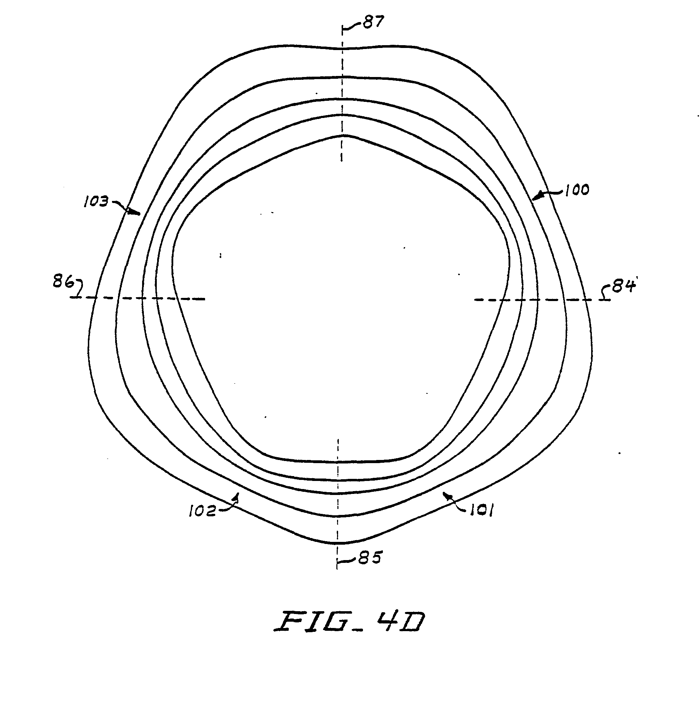

The operation of the system of Figure 3 is illustrated in greater detail in Figures 4A through 4D, which are diagrammatic illustrations of magnetic field configurations within the system of Figure 3, showing the time variation thereof. Figure 4A corresponds to the field configuration shown in Figure 3. Because of the manner in which coils 63 through 78 are energized, strong confinement regions 88, 89, 90 and 91 are generated midway between lines 84, 85, 86 and 87.

Figure 4B illustrates the magnetic field configuration one quarter cycle later. Coils 63, 67, 73 and 77 are now strongly energized so that strong confinement regions 88 and 91 have moved up to become strong confinement regions 92 and 95, and strong confinement regions 88 and 90 have moved up to become strong confinement regions 93 and 94.

Figure 4C illustrates the magnetic field configuration one half cycle after the Figure 4A configuration. Coils 66, 70, 74 and 78 are now strongly energized so that strong confinement regions 88 and 91 have moved upward and merged to become strong confinement region 96. Strong confinement regions 88 and 90 have moved up to become strong confinement regions 97 and 99, and a new strong confinement region 98 has been formed in the vicinity of line 85.

Figure 4D illustrates the magnetic field configuration three quarters of a cycle after the Figure 4A configuration. Strong confinement regions 89 and 90 have moved up to become strong confinement regions 100 and 103. The new strong confinement region 98 shown in Figure 4C in the vicinity of line 85 has split and has become individual strong confinement regions 101 and 102 because coils 69 and 71 are strongly energized and coil 70 is at an intermediate level of energization. The magnetic field configuration then repeats the cycle, passing through the configurations shown in Figures 4A through 4D again.

Thus, the individual strong confinement regions in the system of Figure 3 move in a generally upward direction relative to chamber 62, and move relative to each other, and toward each other, such that any given region within chamber 62 will be periodically exposed to an individual strong confinement region. In addition, the outer plasma regions in the weak confinement areas are swept in a generally upward direction toward dotted line 87, such that they are eventually exposed to a strong confinement field in the vicinity of dotted line 87 such as shown in Figure 4C. As in the case of the system of Figure 1, this provides an average or general confinement effect.

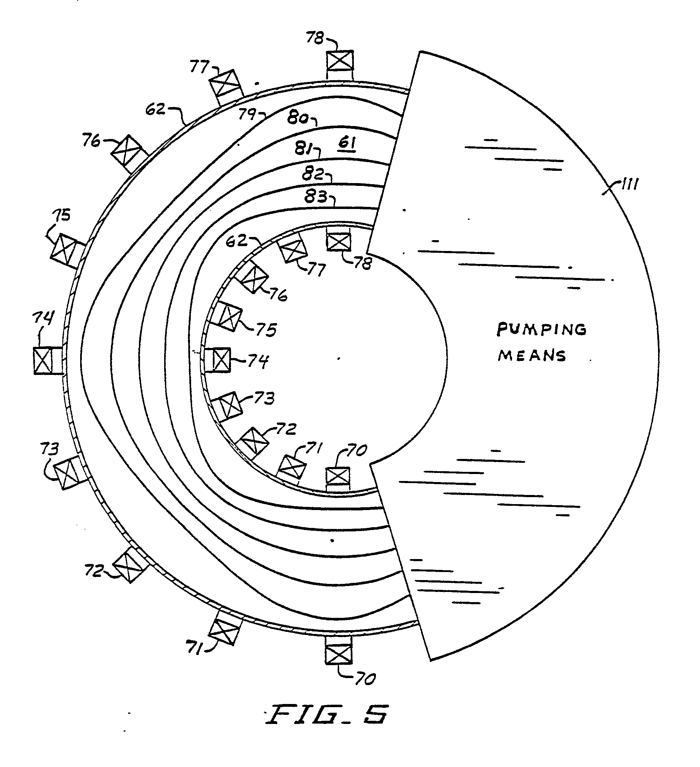

Figure 5 is a diagrammatic illustration of a third form of the invention illustrating the general use of fluid pumping means therein. In Figure 5, plasma confinement regions 61 is contained within chamber 62. Electromagnet coils 70 through 78 encircle chamber 62, and, when energized, generate a plasma confinement magnetic field therein. The magnetic field is indicated by magnetic field lines 79 through 83. Figure 5 also includes pumping means 111 which is used to pump plasma through the chamber 62. The pumping means 111 may be conventional magnetic plasma pumping means now in use and described in the prior art.

Plasma confinement region 61, chamber 62, coils 70 through 78 and magnetic field lines 79 through 83 of Figure 5 correspond to the similarly numbered elements in Figure 3. The difference is the use of pumping means 111 in place of portions of the structure of Figure 3.

Coils 63 through 69 of Figure 3 may be regarded as a form of pumping means to pump portions of the confined plasma in the direction of dotted line 87. Figure 5 is intended to illustrate that such plasma pumping means may be of a more general or conventional form, and that an average or general confinement may be provided by a combination of a magnetic field structure which includes individual strong confinement regions at coils 72 and 76 and pumping means which pumps the plasma relative to the individual strong confinement regions. Depending on the nature of pumping means 111, the strong confinement regions at coils 72 and 76 in the system of Figure 5 may or may not be required to move relative to chamber 62 and pumping means 111. The plasma is passed through the strong confinement regions under action of the pumping means 111.

The desirable frequency of the cyclic magnetic field variations in the operation of the invention will depend on the arrangement and characteristics of the particular confinement device. In general, the desirable operating frequency will be lower than the cyclotron resonant frequencies of the plasma in the major confining field, such that the local strong confinement field regions tend to affect the plasma as a conducting fluid in a collective manner.

Although the invention has been described above in relations to magnetic mirror or pyrotron type plasma confinement system, it will be appreciated that systems according to the invention can be of other shapes and configurations.

The preceding disclosure has described systems in which a non-zero number of local strong confinement regions are present at all times. The local strong confinement regions move, are formed, separate, merge and/or disappear, and their number may change, as the confinement field pattern changes in a generally cyclic manner. However, systems according to the invention may be such that the number of local strong confinement regions is temporarily zero from time to time.

For convenience and clarity of illustration, the drawings show systems with a relatively small number of individual local strong confinement regions. Other configurations are possible with different numbers of local strong confinement regions and, in particular, with larger numbers of local strong confinement regions.

In known plasma confinement systems, a number of individual techniques and means are used for the actual confinement process, and the system of the present invention can also include one or more of these plasma confinement techniques and means.

Pumping means 111 shown in Figure 5 may be any of a number of known means for the pumping of and/or retarding of motion of conducting fluids such as plasma.

In this specification the term confinement space is used to describe a space within which such a diamagnetic fluid is to be generally confined. The confinement space may be elongate and extend generally along a central line. In a typical magnetic mirror type confinement system, the central line will extend from one end or mirror region to the other in a generally straight line. In a typical ring type confinement system, the central line will be closed on itself in the general form of a ring or other closed shape.

## Claims

1. A diamagnetic fluid confinement system, comprising means (12 or 62) defining a confinement space (11 or 61); means (13—29 or 63—78) for generating a magnetic field within said space (11 or 61), said field having a plurality of local strong confinement regions (40—53 or 88—103) separated by weak confinement regions (37—39 or 84—87); and means (31) for causing said strong confinement regions (40—53 or 88—103) to move within said space (11 or 61) so that substantially all of said space (11 or 61) is periodically subjected to the effects of said strong confinement regions (40—53 or 88—95), characterised in that at least two strong confinement regions (e.g. 42 and 43 or 88 and 91) are caused to move towards each other and merge thereby eliminating weak confinement regions between them.

2. A system as claimed in Claim 1, characterised in that said space (11) is linear and has a confinement central line, said magnetic field being generated at least partially parallel to said central line.

3. A system as claimed in Claim 1, characterised in that said space (61) is in the form of a ring.

4. A system as claimed in any preceding claim, characterised in that the diamagnetic fluid is a plasma, and in that said means (31) for causing said strong confinement regions (40—53 or 88—103) to move within said space (11 or 61) includes means to cause the magnetic field strength in each confinement region to vary in a periodic cycle, the frequency of periodic magnetic field strength variations corresponding to the movement of said strong confinement regions (40—53 or 88—103) being lower than the cyclotron resonant frequencies of the plasma particles in said strong confinement regions (40—53 or 88—103).

## Patentansprüche

1. System zum Einschließen diamagnetischer Fluide, das Mittel (12 oder 62), die einen Einschließungsraum (11 oder 61) definieren; Mittel (13—29 oder 63—78) zum Erzeugen eines Magnetfeldes innerhalb dieses Raumes (11—61), wobei das Feld eine Vielzahl lokaler starker Einschließungsbereiche (40—53 oder 88—103) hat, die durch schwache Einschließungsbereiche (37—39 oder 84—87) getrennt sind; und Mittel (31) aufweist, um zu bewirken, daß die starken Einschließungsbereiche (40—53 oder 88 bis 103) sich innerhalb des Raumes (11 oder 61) bewegen, so daß im wesentlichen der gesamte Raum (11 oder 61) periodisch den Wirkungen der starken Einschließungsbereiche (40—53 oder 88—95) ausgesetzt ist, dadurch gekennzeichnet, daß bewirkt wird, daß wenigstens zwei starke Einschließungsbereiche (z.B. 42 und 43 oder 88 und 91) sich aufeinander zu bewegen und sich miteinander vereinigen, wodurch die schwachen Einschließungsbereiche zwischen ihnen beseitigt werden.

2. System nach Anspruch 1, dadurch gekennzeichnet, daß der Raum (11 linear ist und eine mittige Einschließungslinie hat, wobei das Magnetfeld wenigstens teilweise parallel zu der mittigen Linie erzeugt wird.

3. System nach Anspruch 1, dadurch gekennzeichnet, daß der Raum (61) die Form eines Ringes hat.

4. System nach einem der vorangehenden Ansprüche, dadurch gekennzeichnet, daß das diamagnetische Fluid ein Plasma ist und daß die Mittel (31), durch die bewirkt wird, daß die starken Einschließungsbereiche (40—53 oder 88—103) sich innerhalb des Raumes (11 oder 61) bewegen, Mittel einschließen, um zu bewirken, daß sich die Magnetfeldstärke in jedem Einschließungsbereich in einem periodischen Zyklus ändert, wobei die Frequenz periodischer Magnetfeldstärkeänderungen der Bewegung der starken Einschließungsbereiche (40—53 oder 88—103) entspricht und niedriger ist als die Zyklotronresonanzfrequenzen der Plasmateilchen in den starken Einschließungsbereichen (40—53 oder 88—103).

## Revendications

1. Système de confinement de fluide diamagnétique, comprenant des moyens (12 ou 62) définissant un espace (11 ou 61) de confinement, des moyens (13—29 ou 63—78) de génération d'un champ magnétique à l'intérieur dudit espace (11 ou 61), ledit champ ayant plusieurs zones (40—53 ou 88—103) de fort confinement local séparées par des zones (37—39 ou 84—87) de confinement faible; et des moyens (31) destinés à amener lesdites zones (40—53 ou 88—103) de fort confinement à se déplacer à l'intérieur dudit espace (11 ou 61) de manière que pratiquement la totalité dudit espace (11 ou 61) soit soumise périodiquement aux effets desdites zones (40—53 ou 88—95) de fort confinement, caractérisé en ce qu'au moins deux zones (par exemple 42 et 43 ou 88 et 91) de fort confinement sont amenées à se déplacer l'une vers l'autre et à fusionner afin d'éliminer entre elles des zones de faible confinement.

2. Système selon la revendication 1 caractérisé en ce que ledit espace (11) est linéaire et posséde un axe central de confinement, ledit champ magnétique étant généré au moins partiellement parallèlement audit axe central.

3. Système selon la revendication 1, caractérisé en ce que ledit espace (61) se présente sous la forme d'un anneau.

4. Système selon l'une quelconque des revendications précédentes, caractérisé en ce que le fluide diamagnétique est un plasma et en ce que lesdits moyens (31) destinés à amener lesdites zones (40—53 ou 88—103) de fort confinement à se déplacer à l'intérieur dudit espace (11 ou 61) comprennent des moyens amenant la force du champ magnétique dans chaque zone de confinement à varier en un cycle périodique, la fréquence des variations périodiques de la force du champ magnétique, correspondant au mouvement desdites zones (40—53 ou 88—103) de fort confinement, étant aux fréquences de résonance cyclotronique des particules de plasma dans lesdites zones (40—53 ou 88—103) de fort confinement.

FIG. 1

FIG_2A

FIG_2B

FIG_2C

FIG_2D

FIG. 3

FIG_ 4A

FIG_ 4B

FIG_4C

FIG. 4D

FIG. 5